# DEMANDE DE BREVET EUROPEEN

(11) **EP 2 884 379 A1**
(43) Date de publication de la demande: **17.06.2015**
(21) Numéro de dépôt: 14197014.5
(22) Date de dépôt: 09.12.2014
(51) Int. Cl.: G06F 3/0482, G06F 3/0488, G06F 17/30

(54) **Procédé et dispositif de contrôle de l'affichage d'une pluralité de contenus, terminal et programme d'ordinateur correspondants**

(30) Priorité: 16.12.2013 FR 1362681
(71) Demandeur: Orange, 75015 Paris (FR)
(72) Inventeur: Marc, Cécile, 35000 Rennes (FR)

(57) **Abrégé**

L'invention concerne un procédé de contrôle de l'affichage d'une pluralité de contenus, un contenu considéré étant associé à au moins une information qui est représentative dudit contenu considéré et qui est définie par un type et au moins une valeur.

Un tel procédé comprend les étapes suivantes :
- afficher (E1) une première fenêtre graphique (F₀) identifiant un premier contenu parmi ladite pluralité de contenus, ladite première fenêtre ayant un premier côté qui est associé à une valeur d'une information d'un premier type représentative dudit premier contenu,
- déclencher (E3) l'envoi d'une requête en affichage d'un deuxième contenu dont l'information représentative du deuxième contenu est du même type que l'information d'un premier type représentative du premier contenu,
- en réponse à l'envoi de ladite requête, recevoir au moins une information d'identification du deuxième contenu et afficher (E6) une deuxième fenêtre graphique (F_{1,1}) identifiant le deuxième contenu à partir de l'information d'identification reçue, un premier côté de ladite deuxième fenêtre graphique affichée étant voisin du premier côté de la première fenêtre graphique qui est associé à la valeur de l'information d'un premier type représentative dudit premier contenu, la deuxième fenêtre graphique ayant un deuxième côté qui est associé à une valeur d'une information d'un deuxième type représentative dudit deuxième contenu.

## Description

### Domaine de l'invention

Le domaine de l'invention est celui du contrôle de l'affichage de contenus sur un terminal utilisateur. Un tel contenu peut être du texte, du son (ou de l'audio), des images, des vidéos, des applications/services ou encore toute combinaison de ces différents éléments.

L'invention s'applique ainsi de façon privilégiée mais non limitative à l'affichage sur un écran de contenus multimédia, par exemple en vue d'offrir un service de zapping parmi plusieurs chaînes diffusées par un opérateur de télévision numérique ou de navigation dans un catalogue de vidéos, tel que par exemple un catalogue de vidéos à la demande (VOD, pour "Video On Demand" en anglais). L'invention peut notamment être mise en oeuvre dans un terminal doté d'une interface utilisateur et d'une interface graphique, par exemple une tablette, un téléphone portable, un smartphone (« téléphone intelligent »), un ordinateur personnel, une télévision connectée à un réseau de communication, etc...

### Présentation de l'art antérieur

Aujourd'hui, lorsque l'utilisateur souhaite accéder à un contenu pour pouvoir le visualiser ou l'écouter, des catalogues de contenus sont mis à sa disposition afin de rechercher, puis de sélectionner un ou plusieurs contenus d'un type donné ou sur un sujet donné. De tels catalogues, tels que par exemple les catalogues VOD, sont finalement des magasins numériques qui proposent une mise en rayon de contenus multimédia classés de façon thématique, afin de permettre à l'utilisateur de choisir plus facilement et rapidement le contenu dont il a envie.

Le classement proposé est particulièrement intéressant quand un utilisateur a une idée de la catégorie de contenu à laquelle il souhaite accéder.

Cependant, un tel classement a l'inconvénient de cloisonner les contenus de façon statique, et par ce fait, de laisser à l'utilisateur peu de place à la découverte de contenus auxquels ce dernier n'aurait pas forcément songé. Dans le cas par exemple d'un catalogue VOD, si par exemple l'utilisateur est passionné par les films de sciences-fictions et beaucoup moins par les comédies, ce dernier aura tendance à ignorer la catégorie « comédies » lors de sa navigation dans le catalogue.

Un autre inconvénient d'un tel classement est qu'il nécessite une édition manuelle des catalogues, ce qui est lourd et coûteux à mettre en oeuvre compte tenu du nombre sans cesse croissant de contenus à catégoriser.

Il existe donc un besoin d'une solution permettant à l'utilisateur de découvrir spontanément de nouveaux contenus, de façon simple et ludique.

### Objet et résumé de l'invention

Un des buts de l'invention est de remédier à des inconvénients de l'état de la technique précité.

A cet effet, un objet de la présente invention concerne un procédé de contrôle de l'affichage d'une pluralité de contenus, un contenu considéré étant associé à au moins une information qui est représentative du contenu considéré et qui est définie par un type et au moins une valeur.

Un tel procédé est remarquable en ce en ce qu'il comprend les étapes suivantes :
- afficher une première fenêtre graphique identifiant un premier contenu parmi la pluralité de contenus, la première fenêtre ayant un côté auto-activable qui constitue une relation de correspondance entre une valeur d'une information représentative du premier contenu et une valeur d'une information de même type et représentative d'un deuxième contenu,
- auto-activer le côté de la première fenêtre graphique,
- en réponse à l'auto-activation précitée, afficher une deuxième fenêtre graphique identifiant le deuxième contenu, un côté de la deuxième fenêtre graphique affichée étant voisin du côté auto-activable de la première fenêtre graphique.

Une telle disposition permet à l'utilisateur, à partir d'un premier contenu affiché qui présente de l'intérêt pour lui, de visualiser d'autres contenus qui s'affichent de proche en proche, grâce à une relation de correspondance établie au préalable entre le premier contenu affiché et un deuxième contenu à afficher, puis entre le deuxième contenu et un troisième contenu à afficher, etc....

Les contenus ne sont ainsi plus affichés en fonction d'une catégorie commune prédéterminée comme c'est le cas dans l'art antérieur, mais en fonction d'un lien sémantique préalablement défini qui permet d'associer un contenu à un autre contenu. Par ailleurs, le ou les contenus affichés à la suite du premier contenu ne sont pas forcément connus de l'utilisateur. Ainsi, grâce à l'invention, l'utilisateur a la faculté de découvrir spontanément de nouveaux contenus de façon particulièrement simple, ludique et ergonomique.

Le procédé de contrôle d'affichage selon l'invention est par exemple mis en oeuvre dans un terminal, tel qu'une set-top-box ou encore dans un terminal connecté à la set-top-box, tel que par exemple une tablette.

Selon un mode de réalisation particulier, la deuxième fenêtre graphique ayant au moins un côté auto-activable, si après une durée prédéterminée, aucune interaction utilisateur avec la première fenêtre graphique ou la deuxième fenêtre graphique n'a été détectée, le procédé comprend les étapes suivantes :
- auto-activer le côté auto-activable de la deuxième fenêtre graphique,
- en réponse à l'auto-activation précitée, afficher une troisième fenêtre graphique identifiant un troisième contenu, un côté de la troisième fenêtre graphique affichée étant voisin du côté auto-activable de la deuxième fenêtre graphique.

Une telle disposition a pour avantage de rendre l'affichage de contenus dynamique, sans que l'utilisateur n'ait besoin de procéder de lui-même, une fois que le premier contenu a été affiché, à la recherche de nouveaux contenus, par exemple en sélectionnant des critères de recherche et/ou de mots-clés, ce qui peut s'avérer très vite fastidieux et coûteux en temps, compte tenu du très grand nombre de contenus mis à disposition.

Selon encore un autre mode de réalisation particulier, les deuxième et troisième fenêtres graphiques sont affichées selon un axe perpendiculaire respectivement au côté auto-activable de la première fenêtre graphique et au côté auto-activable de la deuxième fenêtre graphique.

Une telle disposition permet de présenter à l'utilisateur le plus grand nombre possible de contenus en optimisant l'occupation de l'écran de son terminal, et cela de façon dense. Par ailleurs, une telle disposition permet de rendre l'affichage des contenus particulièrement intelligible pour l'utilisateur, de façon à ce que ce dernier puisse facilement comprendre le/les liens entre les différents contenus affichés.

De préférence, les première, deuxième et troisième fenêtres graphiques sont de taille et de forme identiques. Plus généralement, dans le cas où plus de trois fenêtres graphiques sont affichées, ces dernières sont configurées pour être de taille et de forme identiques, de façon à présenter à l'utilisateur l'ensemble des contenus de façon homogène.

Selon encore un autre mode de réalisation particulier, la valeur de l'information représentative du premier contenu et la valeur de l'information représentative du deuxième contenu sont égales ou différentes.

Une telle disposition permet d'associer au premier contenu une pluralité de contenus ayant un point commun avec le premier contenu, ce qui permet d'enrichir la découverte, par l'utilisateur, de nouveaux contenus qui viennent s'afficher en association avec le premier contenu.

Dans le cas par exemple où la pluralité de contenus contient des films d'un catalogue VOD et que le premier contenu est par exemple le film « Danse avec les loups » associé classiquement à la métadonnée « acteurs /actrices» dont une valeur significative est l'acteur Kevin Costner puisqu'il y tient le rôle principal, le deuxième contenu pourra être par exemple :
- « Un monde parfait » dont la métadonnée « acteurs /actrices» contient également la valeur significative « Kevin Costner », laquelle est associée au premier contenu par le lien sémantique « a joué dans »,
- « Swing Vote » dont la métadonnée « acteurs /actrices» contient la valeur significative « Mare Winningham », laquelle est associée à la valeur « Kevin Costner » du premier contenu par le lien sémantique « a joué avec ».

Selon encore un autre mode de réalisation particulier, les étapes suivantes sont mises en oeuvre :
- interagir avec l'une quelconque des première, deuxième et troisième fenêtres graphiques affichées,
- afficher successivement une pluralité de fenêtres graphiques identifiant chacune un contenu ayant, comme valeur d'information représentative de ce contenu, la valeur de l'information représentative du contenu identifié dans la fenêtre graphique sur laquelle l'interaction a été mise en oeuvre.

Une telle disposition permet, suite à une interaction de l'utilisateur avec une des fenêtres graphiques affichées à l'aide du procédé de contrôle d'affichage précité, de lui présenter une série de nouveaux contenus qui soient directement associés au contenu identifié dans la fenêtre graphique sur laquelle l'utilisateur a interagi, par une valeur commune de métadonnée. Dans le cas par exemple où les contenus affichés sont des films, une telle valeur commune peut être par exemple un nom d'acteur ou d'actrice commun à celui qui joue dans le film identifié dans la fenêtre graphique sur laquelle l'utilisateur a interagi.

Une telle disposition permet ainsi de proposer avantageusement à l'utilisateur un deuxième niveau d'enrichissement de contenus, à partir du moment où ce dernier interagit avec un contenu proposé parmi un enrichissement de contenus de premier niveau affichés dynamiquement par mise en oeuvre des étapes précitées du procédé de contrôle d'affichage selon l'invention.

Les différents modes ou caractéristiques de réalisation précités peuvent être ajoutés indépendamment ou en combinaison les uns avec les autres, aux étapes du procédé de contrôle d'affichage défini ci-dessus.

L'invention concerne également un dispositif de contrôle de l'affichage d'une pluralité de contenus, un contenu considéré étant associé à au moins une information qui est représentative du contenu considéré et qui est définie par un type et au moins une valeur, un tel dispositif étant adapté pour mettre en oeuvre le procédé de contrôle d'affichage précité.

Un tel dispositif de contrôle d'affichage est remarquable en ce qu'il comprend :
- un module pour afficher une première fenêtre graphique identifiant un premier contenu parmi la pluralité de contenus, la première fenêtre ayant un côté auto-activable qui constitue une relation de correspondance entre une valeur d'une information représentative du premier contenu et une valeur d'une information de même type et représentative d'un deuxième contenu,
- un module pour déclencher l'auto-activation du côté de la première fenêtre graphique, lequel provoque l'affichage, par le module d'affichage, d'une deuxième fenêtre graphique identifiant le deuxième contenu, un côté de la deuxième fenêtre graphique affichée étant voisin du côté auto-activable de la première fenêtre graphique.

Selon un mode de réalisation particulier, lorsque la deuxième fenêtre graphique a au moins un côté auto-activable et si après une durée prédéterminée, aucune interaction utilisateur avec la première fenêtre graphique ou la deuxième fenêtre graphique n'a été détectée, le module de déclenchement d'auto-activation est activé pour déclencher l'auto-activation du côté auto-activable de la deuxième fenêtre graphique, lequel provoque l'affichage, par le module d'affichage, d'une troisième fenêtre graphique identifiant un troisième contenu, un côté de la troisième fenêtre graphique affichée étant voisin du côté auto-activable de la deuxième fenêtre graphique.

Selon encore un autre mode de réalisation particulier, le module d'affichage affiche les deuxième et troisième fenêtres graphiques selon un axe perpendiculaire respectivement au côté auto-activable de la première fenêtre graphique et au côté auto-activable de la deuxième fenêtre graphique.

L'invention concerne également un terminal comprenant le dispositif de contrôle d'affichage mentionné ci-dessus.

Un tel terminal est par exemple une set-top-box ou bien un terminal connecté à la set-top-box, tel que par exemple une tablette.

L'invention concerne encore un programme d'ordinateur comportant des instructions pour mettre en oeuvre le procédé de contrôle d'affichage selon l'invention, lorsqu'il est exécuté sur un terminal ou plus généralement sur un ordinateur.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise également un support d'enregistrement lisible par un ordinateur sur lequel est enregistré un programme d'ordinateur, ce programme comportant des instructions adaptées à la mise en oeuvre du procédé de contrôle d'affichage selon l'invention, tel que décrit ci-dessus.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'enregistrement peut être un circuit intégré dans lequel le programme est incorporé, le circuit étant adapté pour exécuter ou pour être utilisé dans l'exécution du procédé de contrôle d'affichage précité.

Le dispositif de contrôle d'affichage, le terminal et le programme d'ordinateur correspondants précités présentent au moins les mêmes avantages que ceux conférés par le procédé de contrôle d'affichage selon la présente invention.

### Liste des figures

D'autres avantages et caractéristiques de l'invention apparaîtront plus clairement à la lecture de la description suivante de plusieurs modes de réalisation particuliers de l'invention, donnés à titre de simples exemples illustratifs et non limitatifs, et des dessins annexés, parmi lesquels :
- la figure 1 présente de façon schématique une architecture dans laquelle est mise en oeuvre le procédé de contrôle d'affichage selon l'invention ;
- la figure 2 illustre l'organisation des contenus dans la base de connaissance mise en oeuvre dans l'architecture de la figure 1 ;
- la figure 3 présente la structure simplifiée d'un dispositif de contrôle d'affichage selon un mode de réalisation de l'invention ;
- la figure 4 présente de façon schématique les étapes d'un procédé de contrôle d'affichage selon l'invention ;
- les figures 5A à 5C représente un premier exemple d'interface affichée à l'aide du procédé de contrôle d'affichage de la figure 4 ;
- les figures 6A à 6C représente un deuxième exemple d'interface affichée à l'aide du procédé de contrôle d'affichage de la figure 4 ;
- la figure 7 présente de façon schématique les étapes d'un procédé d'affichage de contenus suite à différentes interactions utilisateur sur l'interface représentée à la figure 6B.

### Description d'un mode de réalisation particulier de l'invention

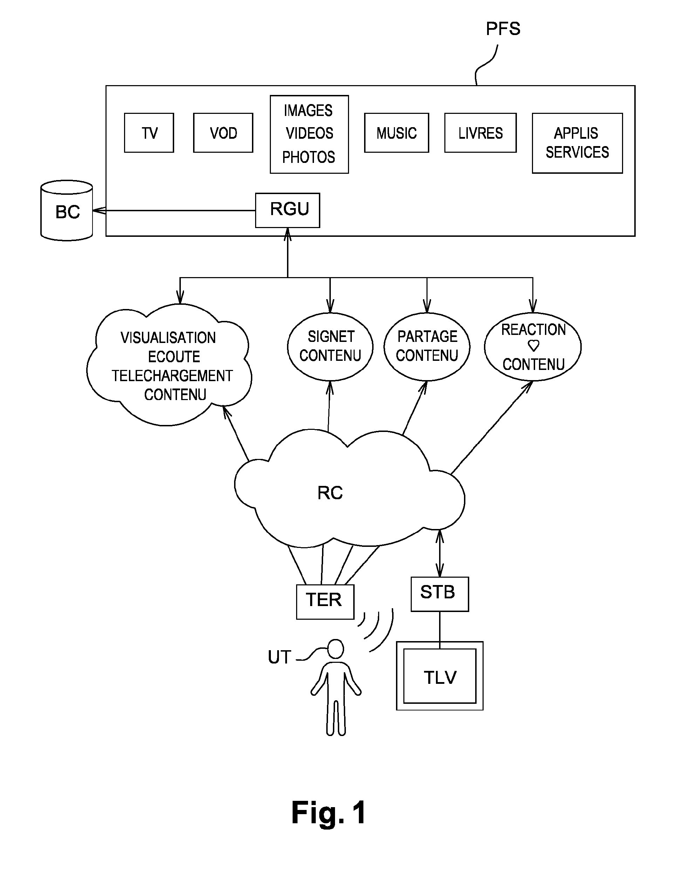

En relation avec la **figure 1****,** on présente une architecture dans laquelle est mis en oeuvre le procédé de contrôle d'affichage selon l'invention.

Une telle architecture comprend un terminal TER d'accès à des contenus proposés par une plateforme de service PFS, via un réseau de communication RC, tel que par exemple de type IP (abréviation anglaise de « Internet Protocol »). La plateforme de service PFS propose différents contenus à l'utilisateur UT du terminal TER, tels que par exemple:
- des contenus télévisuels TV, notamment ceux à diffusion programmée dans une grille de programmes,
- des catalogues VOD,
- des catalogues de vidéos et/ou d'images et/ou de photos,
- des catalogues de musique,
- des catalogues de livres numériques,
- des catalogues d'applications et/ou de services.

L'architecture précitée comprend en outre un autre terminal d'accès STB qui est apte à recevoir les contenus en provenance de la plateforme PFS, à les traiter et à les restituer à l'utilisateur UT sur un autre terminal, tel qu'un terminal d'affichage, par exemple un téléviseur TLV tel que représenté sur la **figure 1****.**

Dans un exemple de réalisation, le terminal d'accès et ledit terminal d'affichage sont regroupés en un seul terminal. Il pourrait par exemple s'agir d'un téléviseur contenant un décodeur de type set-top-box, Dans un autre exemple qui est celui représenté sur la **figure 1****,** ledit autre terminal d'accès STB est une set-top-box et ledit terminal d'accès TER est une tablette faisant office de terminal d'affichage connecté à la set-top-box au moyen d'un réseau local, par exemple sans fil, en particulier du type WiFi ou CPL (abréviation de « courants porteurs en ligne »). Selon d'autres exemples non représentés, le terminal TER pourrait être un téléphone portable, un smartphone (« téléphone intelligent »), une télévision connectée à un réseau de communication, etc...

L'utilisateur UT peut interagir avec le terminal d'accès STB à l'aide de sa tablette TER qui comprend à cet effet une application logicielle adaptée de télécommande. La tablette TER a alors la possibilité d'afficher une interface contenant des touches dédiées à des commandes préenregistrées. Ainsi, la tablette TER présente les mêmes fonctions qu'une télécommande classique de téléviseur. Par exemple, l'utilisateur peut demander la sélection d'un contenu reçu en provenance de la plateforme de services PFS, par simple pression des touches directionnelles «← », «→ », «↑ », « ↓ » dans un menu associé à la visualisation des contenus reçus. L'utilisateur peut aussi valider le contenu sélectionné en pressant la touche « OK ». Lorsque l'utilisateur active une touche de sa télécommande, un message comprenant la commande associée à cette touche est envoyé au terminal d'accès STB selon un protocole de communication adapté au réseau local utilisé.

Le terminal d'accès STB, de même que la tablette TER, comprennent en outre des moyens de connexion au réseau de communication RC qui peuvent être, par exemple, de type x-DSL, fibre ou encore 3G et 4G.

Selon l'invention, la plateforme de service PFS dialogue avec une base de connaissance BC qui, pour chaque type de contenus proposés par ladite plateforme, calcule une relation de correspondance entre une valeur d'au moins une information représentative d'un contenu considéré et une valeur d'une information de même type et représentative d'un autre contenu considéré.

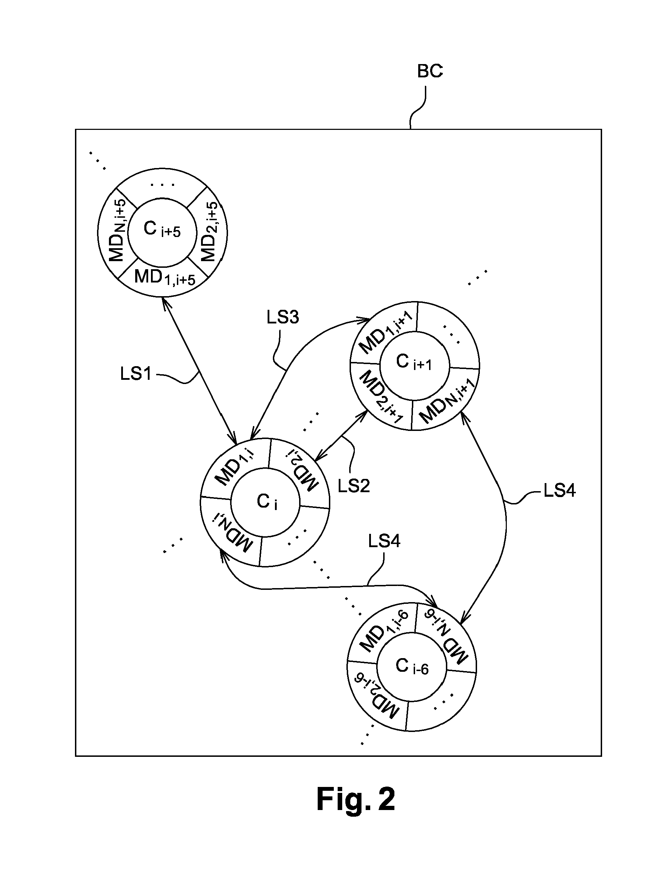

Un détail de l'organisation des contenus dans une telle base de connaissance BC est représenté sur la **figure 2****.** Dans un souci de simplification de la **figure 2****,** seuls quatre contenus Ci, Cᵢ₊₁, Cᵢ₊₅, Cᵢ₋₆ sont représentés à titre d'exemples non limitatifs.

Dans la base de connaissance BC, un contenu considéré Cᵢ parmi une pluralité de contenus de même type C₀, C₁,..., Cᵢ,..., C_{S}, avec 0≤i≤S, tels que par exemple des films du catalogue VOD représenté sur la **figure 1****,** est associé, de façon connue en soi, à une pluralité d'informations représentatives de ce contenu, appelées métadonnées, et désignées par les références MD_{1,i}, MD_{2,i},..., MD_{N,i} sur la **figure 2****.** Dans le cas d'un film, de telles métadonnées sont notamment :
- le résumé,
- le réalisateur,
- les acteurs/actrices,
- l'année de production,
- le genre : aventure, drame, science-fiction, comédie,etc....
- le thème : amour, solitude, vieillesse, etc...
- le lieu du tournage du film ou le lieu où se situe l'action du film.

A chacune des métadonnées MD_{1,i}, MD_{2,i},..., MD_{N,i} sont attribuées une ou plusieurs valeurs. Par exemple, dans le cas de la métadonnée « acteurs/actrices », une valeur est attribuée à chaque acteur/actrice jouant dans le film. De façon correspondante, un film peut avoir plusieurs valeurs de genre ou de thème.

Dans un souci de simplification et d'allégement des calculs, la base de connaissance BC associe, pour chacune des métadonnées MD_{1,i}, MD_{2,i},..., MD_{N,i}, ou seulement certaines d'entre elles, une seule valeur, la plus significative. Par exemple, dans le cas de la métadonnée « acteurs/actrices », la base de connaissance BC associe à cette métadonnée la valeur « acteur principal/actrice principale ». De même, dans le cas de la métadonnée « genre », la base de connaissance associe à cette métadonnée la valeur « genre principal », c'est-à-dire le genre dont la fréquence d'apparition dans le film est la plus élevée.

A titre d'exemple sur la **figure 2** **:**
- les premières métadonnées MD_{1,i}, MD_{1,i+1} MD_{1,i+5}, MD_{i,i-6} relatives respectivement aux contenus Cᵢ, Cᵢ₊₁, Cᵢ₊₅, Cᵢ₋₆ sont du même type, par exemple « acteur principal/actrice principale »,
- les deuxièmes métadonnées MD_{2,i}, MD_{2,i+1} MD_{2,i+5}, MD_{2**,i**-6} relatives respectivement aux contenus Cᵢ, Cᵢ₊₁, Cᵢ₊₅, Cᵢ₋₆ sont du même type, par exemple « année de réalisation »,
- ...,
- les Nièmes métadonnées MD_{N,i}, MD_{N,i+1} MD_{N,i+5}, MD_{N,i-6} relatives respectivement aux contenus Cᵢ, Cᵢ₊₁, Cᵢ₊₅, Cᵢ₋₆ sont du même type, par exemple « genre principal ».

La base de connaissance BC établit alors, pour chaque métadonnée de même type, un ou plusieurs liens sémantiques permettant de rattacher un contenu ayant une valeur déterminée pour cette métadonnée à un ou plusieurs contenus dont la même métadonnée a une valeur identique ou différente de la valeur déterminée.

Dans l'exemple de la **figure 2** **:**
- le lien sémantique LS1 calculé signifie par exemple « a joué dans ». Si par exemple l'acteur principal est le même dans le film Cᵢ et dans le film Cᵢ₊₅, la base de connaissance fait correspondre la valeur de la métadonnée MD_{1,i} du film Cᵢ à la valeur de la métadonnée MD_{1,i+5} du film Cᵢ₊₅ via le lien sémantique LS1 ;
- le lien sémantique LS2 calculé signifie par exemple « même année de réalisation que ». Si par exemple le film Cᵢ et le film Cᵢ₊₁ ont été réalisés la même année, la base de connaissance BC fait correspondre la valeur de la métadonnée MD_{2,i} du film Cᵢ à la valeur de la métadonnée MD_{2,i+1} du film Cᵢ₊₁ via le lien sémantique LS2 ;
- le lien sémantique LS3 calculé signifie par exemple « a joué avec ». Si par exemple l'acteur principal du film Cᵢ a joué avec l'actrice principale définie par la métadonnée MD_{2,i+1} du film Cᵢ₊₁, la base de connaissance BC fait correspondre la valeur de la métadonnée MD_{1,i} du film Cᵢ à la valeur de la métadonnée MD_{1,i+1} du film Cᵢ₊₁ via le lien sémantique LS3 ;
- le lien sémantique LS4 calculé signifie par exemple « même genre principal que ». Si par exemple les films Cᵢ, Cᵢ₊₁ et Cᵢ₋₆ ont le même genre principal, la base de connaissance BC fait correspondre, via le lien sémantique LS4, la valeur de la métadonnée MD_{N,i} du film Cᵢ à la valeur de la métadonnée MD_{N,i+1} du film Cᵢ₊₁ et à la valeur de la métadonnée MD_{N,i-6} du film Cᵢ₋₆.

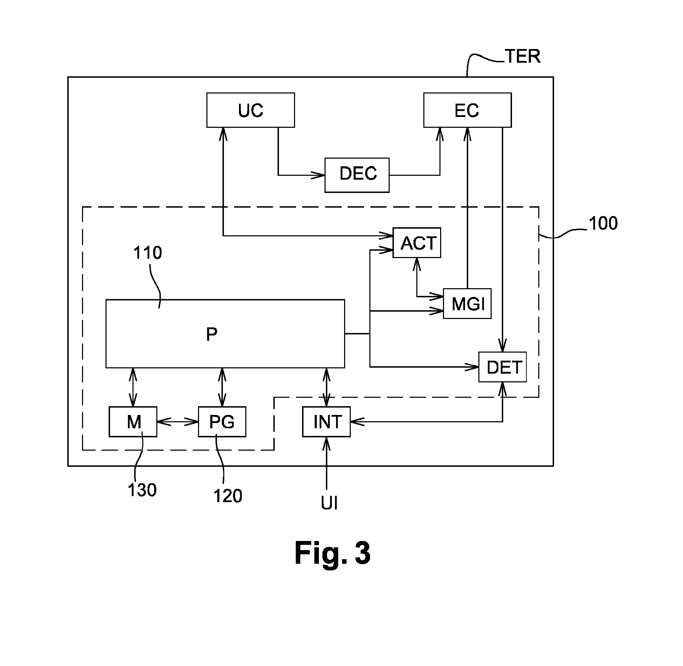

En relation avec la **figure 3****,** on considère maintenant la structure simplifiée d'un dispositif 100 de contrôle d'affichage, selon un exemple de réalisation de l'invention. Un tel dispositif de contrôle d'affichage est adapté pour mettre en oeuvre le procédé de contrôle d'affichage selon l'invention qui va être décrit ci-dessous.

Dans cet exemple, le dispositif de contrôle d'affichage 100 est intégré dans la tablette TER de la **figure 1** qui est connectée au terminal d'accès STB également représenté sur la **figure 1****.**

Dans l'exemple représenté à la **figure 3****,** le dispositif 100 comprend une unité de traitement 110, équipée par exemple d'un processeur P, et pilotée par un programme d'ordinateur Pg 120, stocké dans une mémoire M 130 et mettant en oeuvre le procédé de contrôle d'affichage selon l'invention. La tablette TER comprend une unité de communication UC qui contient un module d'émission/réception adapté pour :
- émettre une requête en restitution d'un contenu qui est soit préalablement stocké dans le terminal d'accès STB de la **figure 1****,** soit mis à disposition dans la plateforme de service PFS de la **figure 1****,**
- recevoir le contenu requis.

A l'initialisation, les instructions de code du programme d'ordinateur Pg 120 sont par exemple chargées dans une mémoire RAM (non représentée) avant d'être exécutées par le processeur P de l'unité de traitement 110. Le processeur de l'unité de traitement 110 met en oeuvre les étapes du procédé de contrôle d'affichage qui va être décrit ci-dessous, selon les instructions du programme d'ordinateur 120.

De façon connue en tant que telle, la tablette TER comprend :
- un module INT de traitement des interactions utilisateurs UI,
- un écran de visualisation EC,
- une interface DEC de décodage audio/vidéo des signaux audio, vidéo ou audiovisuels représentatifs des contenus reçus, ladite interface étant adaptée pour transmettre les signaux décodés à l'écran EC.

Selon l'invention, le dispositif de contrôle d'affichage comprend en outre un module ACT de déclenchement d'auto-activation, un module MGI de génération d'interface, un module DET de détection d'interaction utilisateur, lesquels seront décrits plus en détail dans la suite de la description.

Les modules ACT, MGI et DET précités sont pilotés par le processeur P de l'unité de traitement 110.

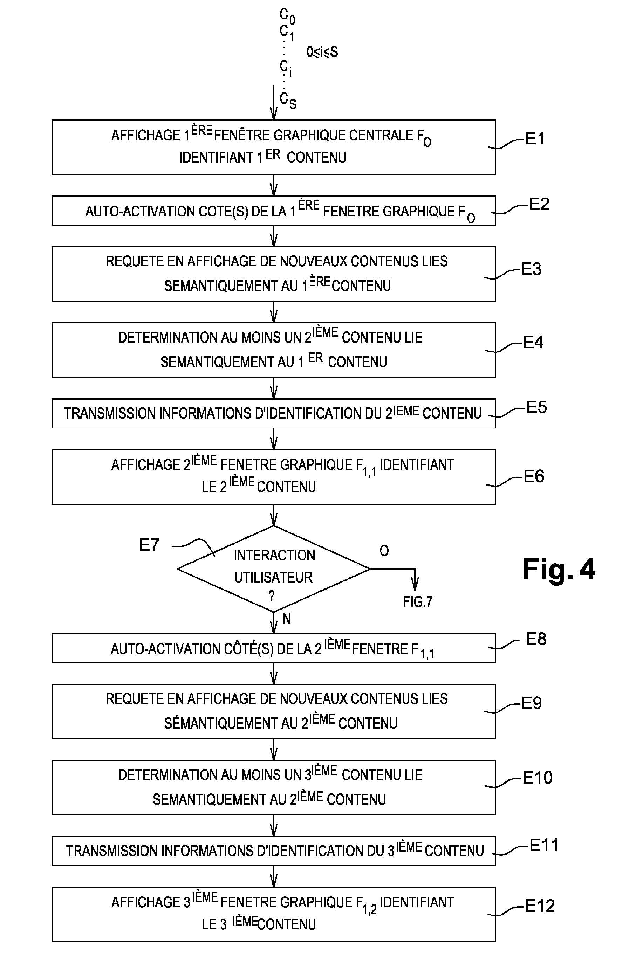

En relation avec la **figure 4****,** on présente maintenant les étapes du procédé de contrôle d'affichage conformément à un mode de réalisation selon l'invention. Dans le mode de réalisation représenté, ledit procédé de contrôle d'affichage est mis en oeuvre par la tablette TER représentée sur les **figures 1** et **3****.**

Au cours d'une étape E1 représentée à la **figure 4****,** il est procédé à l'affichage d'un premier contenu sur l'écran EC de la tablette TER de la **figure 3****.**

Un tel premier contenu appartient à une pluralité de contenus C₀, C₁,..., Cᵢ,.... C_{S}, avec 0≤i≤S, ledit premier contenu ayant été préalablement classifié dans la base de connaissance BC décrite ci-dessus en relation avec la **figure 2****.** A cet effet, ledit premier contenu peut être du texte, du son (ou de l'audio), des images, des vidéos, des applications/services ou encore toute combinaison de ces différents éléments.

L'affichage d'un tel premier contenu résulte d'une action de l'utilisateur sur ce dernier, laquelle est récupérée, via le réseau de communication RC, par un module RGU de récupération des goûts de l'utilisateur qui est contenu dans la plateforme de service PFS de la **figure 1****.**

En référence à la **figure 1****,** il peut s'agir par exemple :
- d'une visualisation, d'une écoute ou d'un téléchargement de ce premier contenu mis à disposition dans la plateforme de service PFS,
- de l'ajout d'un signet (« bookmark » en anglais) sur ce premier contenu,
- d'un partage de ce premier contenu par l'utilisateur UT avec d'autres utilisateurs, via le réseau de communication RC, qui pourrait par exemple être un réseau social,
- d'une réaction positive de la part de l'utilisateur UT, suite à l'accès à ce premier contenu, telle que par exemple l'appui sur une icône « j'aime » d'une page Web suite à l'écoute ou à la visualisation sur le Web de ce premier contenu apprécié par l'utilisateur UT.

De façon optionnelle, l'utilisateur UT a la possibilité de déclarer manuellement ses goûts pour ce premier contenu qui lui a plu en envoyant une requête en déclaration de goûts au module RGU de la plateforme de service PFS de la **figure 1****.**

Conformément à l'invention, une première fenêtre graphique F₀ identifiant le premier contenu est affichée sur l'écran EC de la tablette TER. Une telle étape est mise en oeuvre dans un module de génération d'interface MGI du dispositif de contrôle d'affichage 100, tel que représenté à la **figure 3****.**

De façon préférentielle, la première fenêtre graphique F₀ présente une forme polygonale et est affichée au centre de l'écran EC.

Ladite première fenêtre présente avantageusement un côté auto-activable constituant une relation de correspondance calculée par la base de connaissance BC de la **figure 2****.** Comme expliqué précédemment, cette relation de correspondance est un lien sémantique reliant une valeur d'une métadonnée représentative du premier contenu et une valeur d'une métadonnée de même type et représentative d'un deuxième contenu.

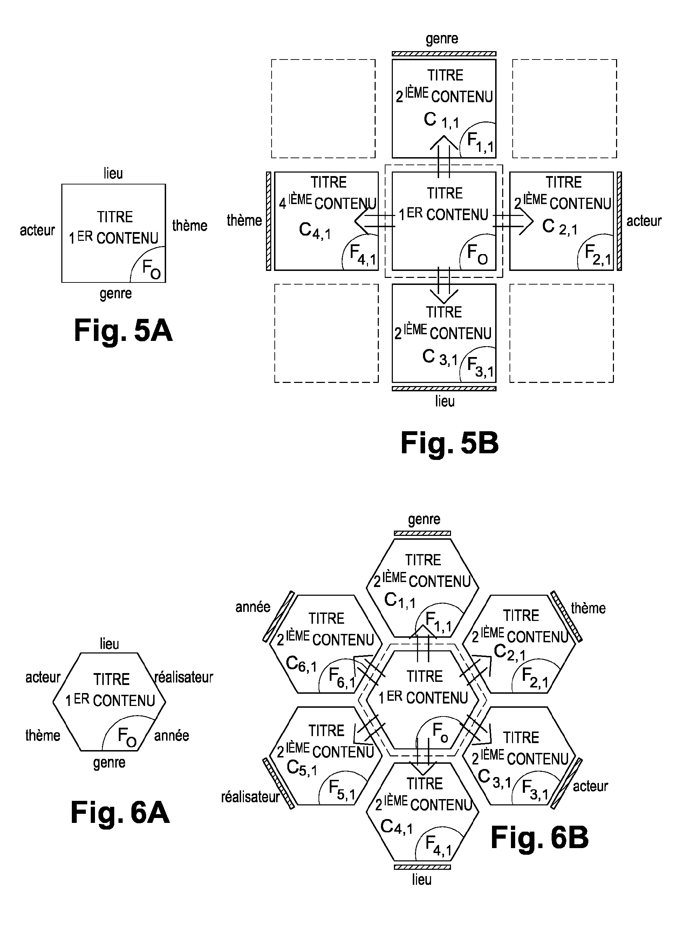

Selon un premier mode de réalisation représenté sur la **figure 5A****,** le premier contenu est par exemple un film. La fenêtre graphique F₀ a par exemple une forme rectangulaire et la face de cette dernière identifie le premier contenu, par exemple à l'aide de son titre ou bien de l'affiche qui lui correspond.

Dans l'exemple de la **figure 5A****,** les quatre côtés de la fenêtre graphique F₀ sont auto-activables et ont été associés préalablement dans la base de connaissance BC de la **figure** 2 respectivement à quatre métadonnées différentes telles que par exemple « lieu », « thème », « genre », « acteur ».

Selon un premier exemple de réalisation, ces quatre métadonnées sont prédéterminées dans la base de connaissance BC. Selon un deuxième exemple de réalisation, ces quatre métadonnées sont configurables par l'utilisateur UT, via un menu par exemple.

Selon un deuxième mode de réalisation représenté sur la **figure 6A****,** le premier contenu est toujours un film. La fenêtre graphique F₀ a par exemple une forme hexagonale et, comme dans l'exemple de la **figure 5A****,** la face de cette dernière identifie le premier contenu, par exemple à l'aide de son titre ou bien de l'affiche qui lui correspond.

Dans l'exemple de la **figure 6A****,** les six côtés de la fenêtre graphique F₀ sont auto-activables et ont été associés préalablement dans la base de connaissance BC de la **figure 2** respectivement à six métadonnées différentes, telles que par exemple « lieu », « réalisateur », « année », « genre », « thème » « acteur ».

Selon un premier exemple de réalisation, ces six métadonnées sont prédéterminées dans la base de connaissance BC. Selon un deuxième exemple de réalisation, ces six métadonnées sont configurables par l'utilisateur UT, via un menu par exemple.

Tous les côtés de la fenêtre graphique F₀ ne sont pas forcément auto-activables. Un seul côté ou plus pourra être auto-activable selon l'implémentation souhaitée, et en particulier selon la taille de l'écran EC du terminal TER.

Au cours d'une étape E2 représentée à la **figure 4****,** chaque côté auto-activable de la fenêtre graphique F₀ est auto-activé à l'aide d'un module ACT de déclenchement d'auto-activation qui est contenu dans le dispositif de contrôle d'affichage 100, tel que représenté à la **figure 3****.**

A cet effet, au cours d'une étape E3 représentée sur la **figure 4****,** le module ACT déclenche auprès de la plateforme de service PFS de la **figure 1****,** via le module de communication UC de la tablette TER de la **figure 3****,** une requête en affichage de nouveaux contenus liés sémantiquement au premier contenu affiché dans la première fenêtre graphique F₀.

A réception de cette requête, au cours d'une étape E4 représentée sur la **figure 4****,** la plateforme PFS dialogue avec la base de connaissance BC en vue d'obtenir au moins un deuxième contenu lié sémantiquement au premier contenu, selon un premier degré de connaissance.

Dans le cas de la fenêtre graphique de la **figure 5A****,** la base de connaissance BC détermine :
- un premier deuxième contenu C_{1,1} dont le lieu est commun à celui du contenu identifié dans la première fenêtre graphique F₀,
- un second deuxième contenu C_{2,1} dont le thème est commun à celui du contenu identifié dans la première fenêtre graphique F₀,
- un troisième deuxième contenu C_{3,1} dont le genre est commun à celui du contenu identifié dans la première fenêtre graphique F₀,
- un quatrième deuxième contenu C_{4,1} dont l'acteur principal est commun à celui du contenu identifié dans la première fenêtre graphique F₀ ou dont l'acteur principal a joué avec un ou une actrice principale du contenu identifié dans la première fenêtre graphique F₀.

A l'issue de cette détermination, il est vérifié que le contenu identifié dans la première fenêtre graphique F₀, le contenu C_{1,1}, le contenu C_{2,1}, le contenu C_{3,1} et le contenu C_{4,1} sont tous différents les uns des autres.

Dans le cas de la fenêtre graphique de la **figure 6A****,** la base de connaissance BC détermine :
- un premier deuxième contenu C_{1,1} dont le lieu est commun à celui du contenu identifié dans la première fenêtre graphique F₀,
- un second deuxième contenu C_{2,1} dont le réalisateur est commun à celui du contenu identifié dans la première fenêtre graphique F₀,
- un troisième deuxième contenu C_{3,1} dont l'année de réalisation est la même que celle du contenu identifié dans la première fenêtre graphique F₀,
- un quatrième deuxième contenu C_{4,1} dont le genre est commun à celui du contenu identifié dans la première fenêtre graphique F₀,
- un cinquième deuxième contenu C_{5,1} dont le thème est commun à celui du contenu identifié dans la première fenêtre graphique F₀,
- un sixième deuxième contenu C_{6,1} dont l'acteur principal est commun à celui du contenu identifié dans la première fenêtre graphique F₀ ou dont l'acteur principal a joué avec un ou une actrice principale du contenu identifié dans la première fenêtre graphique F₀.

A l'issue de cette détermination, il est vérifié que le contenu identifié dans la première fenêtre graphique F₀, le contenu C_{1,1}, le contenu C_{2,1}, le contenu C_{3,1}, le contenu C_{4,1}, le contenu C_{5,1} et le contenu C_{6,1} sont tous différents les uns des autres.

Au cours d'une étape E5 représentée sur la **figure 4****,** la plateforme PFS renvoie à la tablette TER, via le réseau de communication RC, les informations d'identification des contenus déterminés par la base de connaissance BC, en particulier le titre de ces contenus ou l'affiche concernant ces contenus, s'il s'agit de films par exemple.

Au cours d'une étape E6 représentée à la **figure 4****,** il est procédé à l'affichage d'au moins un deuxième contenu sur l'écran EC de la tablette TER de la **figure 3****.** A cet effet, une deuxième fenêtre graphique F_{1,1} identifiant le deuxième contenu est affichée à l'aide du module MGI de génération d'interface de la **figure 3****,** un côté de ladite deuxième fenêtre graphique affichée étant voisin du côté auto-activable de ladite première fenêtre graphique F₀.

Dans l'exemple de la **figure 5A****,** comme représenté sur la **figure 5B****,** quatre fenêtres graphiques F_{1,1}, F_{2,1}, F_{3,1} et F_{4,1} identifiant respectivement les quatre contenus C_{1,1}, C_{2,1}, C_{3,1} et C_{4,1} sont affichées autour de la fenêtre centrale F₀ identifiant le premier contenu.

Les quatre fenêtres graphiques F_{1,1}, F_{2,1}, F_{3,1} et F_{4,1} ainsi affichées autour de la première fenêtre graphique centrale F₀ permettent à l'utilisateur UT, sans qu'il n'ait eu besoin d'interagir sur la tablette TER, de visualiser, selon un premier degré d'enrichissement de connaissance établi par la base de connaissance BC, quatre nouveaux contenus que l'utilisateur ne connaissait pas forcément et qui présentent chacun un lien de parenté avec le premier contenu, grâce à chaque métadonnée associée à chacun des quatre côtés de la première fenêtre graphique F₀.

Dans l'exemple de la **figure 6A****,** comme représenté sur la **figure 6B****,** six fenêtres graphiques F_{1,1}, F_{2,1}, F_{3,1}, F_{4,1} F_{5,1} F_{6,1} identifiant respectivement les six contenus C_{1,1}, C_{2,1}, C_{3,1}, C_{4,1}, C_{5,1}, C_{6,1} sont affichées autour de la fenêtre centrale F₀ identifiant le premier contenu.

Les six fenêtres graphiques F_{1,1}, F_{2,1}, F_{3,1}, F_{4,1}, F_{5,1}, F_{6,1} ainsi affichées autour de la première fenêtre graphique centrale F₀ permettent à l'utilisateur UT, sans qu'il n'ait eu besoin d'interagir sur la tablette TER, de visualiser, selon un premier degré d'enrichissement de connaissance établi par la base de connaissance BC, six nouveaux contenus que l'utilisateur ne connaissait pas forcément et qui présentent chacun un lien de parenté avec le premier contenu, grâce à chaque métadonnée associées à chacun des six côtés de la première fenêtre graphique F₀.

De manière préférentielle, dans les deux modes de réalisation représentés, les fenêtres graphiques affichées ont toutes la même forme et la même taille de façon à présenter les contenus à l'utilisateur de manière uniforme et condensée.

Par ailleurs, comme représenté sur les **figures 5B** et **6B****,** le module de génération d'interface MGI de la **figure 3** est configuré pour afficher les deuxièmes fenêtres graphiques au voisinage de la première fenêtre graphique centrale F₀, selon une direction prédéterminée telle que représentée par les double flèches sur les **figures 5B** et **6B** et qui dépend de la géométrie choisie pour la première fenêtre centrale F₀, en particulier de l'orientation des côtés de cette dernière.

Selon l'invention, chacune des deuxièmes fenêtres graphiques est affichée selon un axe perpendiculaire au côté auto-activable de la première fenêtre graphique centrale F₀ qui lui est associé.

Selon l'invention, au moins un côté de chacune des deuxièmes fenêtres graphiques affichées est associé à une métadonnée qui n'est pas obligatoirement la même qu'une des métadonnées associées à la première fenêtre graphique centrale F₀.

Dans l'exemple représenté sur la **figure 5B****,** pour chaque deuxième fenêtre graphique affichée, un seul côté est auto-activable et est associé à une métadonnée déjà attribuée à l'un des côtés de la première fenêtre graphique centrale F₀.

Ainsi, selon un effet miroir par rapport à la première fenêtre F₀:
- la première deuxième fenêtre F_{1,1} a uniquement son côté supérieur auto-activable qui est associé à la métadonnée « genre » qui était elle-même associée au côté inférieur de la première fenêtre F₀,
- la seconde deuxième fenêtre F_{2,1} a uniquement son côté droit auto-activable qui est associé à la métadonnée « acteur » qui était elle-même associée au côté gauche de la première fenêtre F₀,
- la troisième deuxième fenêtre F_{3,1} a uniquement son côté inférieur auto-activable qui est associé à la métadonnée « lieu » qui était elle-même associée au côté supérieur de la première fenêtre F₀,
- la quatrième deuxième fenêtre F_{4,1} a uniquement son côté gauche auto-activable qui est associé à la métadonnée « thème » qui était elle-même associée au côté droit de la première fenêtre F₀.

Dans l'exemple représenté sur la **figure 6B****,** pour chaque deuxième fenêtre graphique affichée, un seul côté est auto-activable et est associé à une métadonnée déjà attribuée à l'un des côtés de la première fenêtre graphique centrale F₀.

Ainsi, selon un effet miroir par rapport à la première fenêtre F₀:
- la première deuxième fenêtre F_{1,1} a uniquement son côté supérieur auto-activable qui est associé à la métadonnée « genre » qui était elle-même associée au côté inférieur de la première fenêtre F₀,
- la seconde deuxième fenêtre F_{2,1} a uniquement son côté supérieur droit auto-activable qui est associé à la métadonnée « thème » qui était elle-même associée au côté inférieur gauche de la première fenêtre F₀,
- la troisième deuxième fenêtre F_{3,1} a uniquement son côté inférieur droit auto-activable qui est associé à la métadonnée « acteur » qui était elle-même associée au côté supérieur gauche de la première fenêtre F₀,
- la quatrième deuxième fenêtre F_{4,1} a uniquement son côté inférieur auto-activable qui est associé à la métadonnée « lieu » qui était elle-même associée au côté supérieur de la première fenêtre F₀,
- la cinquième deuxième fenêtre F_{5,1} a uniquement son côté inférieur gauche auto-activable qui est associé à la métadonnée « réalisateur » qui était elle-même associée au côté supérieur droit de la première fenêtre F₀,
- la sixième deuxième fenêtre F_{6,1} a uniquement son côté supérieur gauche auto-activable qui est associé à la métadonnée « année » qui était elle-même associée au côté inférieur droit de la première fenêtre F₀.

Selon un mode de réalisation non représenté, le module MGI de génération d'interface est configuré pour faire apparaître en surbrillance les côtés auto-activables des fenêtres affichées, de façon à ce que l'utilisateur comprenne la logique de voisinage entre chaque contenu.

Dans le cas de l'interface graphique affichée sur la **figure 5B****,** une nouvelle étape d'affichage de deuxièmes contenus est éventuellement mise en oeuvre de telle façon qu'un ensemble de deuxièmes fenêtres graphiques entoure complètement la première fenêtre centrale F₀. Ces deuxièmes fenêtres graphiques complémentaires sont représentées en pointillés sur la **figure 5B****.**

A cet effet, selon l'implémentation choisie :
- le côté gauche de la deuxième fenêtre F_{1,1} ou le côté supérieur de la deuxième fenêtre F_{4,1} devra être auto-activable pour permettre l'affichage de la deuxième fenêtre complémentaire en haut à gauche,
- le côté droit de la deuxième fenêtre F_{1,1} ou le côté supérieur de la deuxième fenêtre F_{2,1} devra être auto-activable pour permettre l'affichage de la deuxième fenêtre complémentaire en haut à droite,
- le côté inférieur de la deuxième fenêtre F_{2,1} ou le côté droit de la deuxième fenêtre F_{3,1} devra être auto-activable pour permettre l'affichage de la deuxième fenêtre complémentaire en bas à droite,
- le côté inférieur de la deuxième fenêtre F_{4,1} ou le côté gauche de la deuxième fenêtre F_{3,1} devra être auto-activable pour permettre l'affichage de la deuxième fenêtre complémentaire en bas à gauche.

En référence à nouveau à la **figure 4****,** au cours d'une étape E7, il est procédé à la détection d'une interaction éventuelle de l'utilisateur avec les fenêtres graphiques affichées au cours des étapes précédentes.

Une telle étape est mise en oeuvre par un module de détection DET qui est contenu dans le dispositif de contrôle d'affichage 100 de la **figure 3****.**

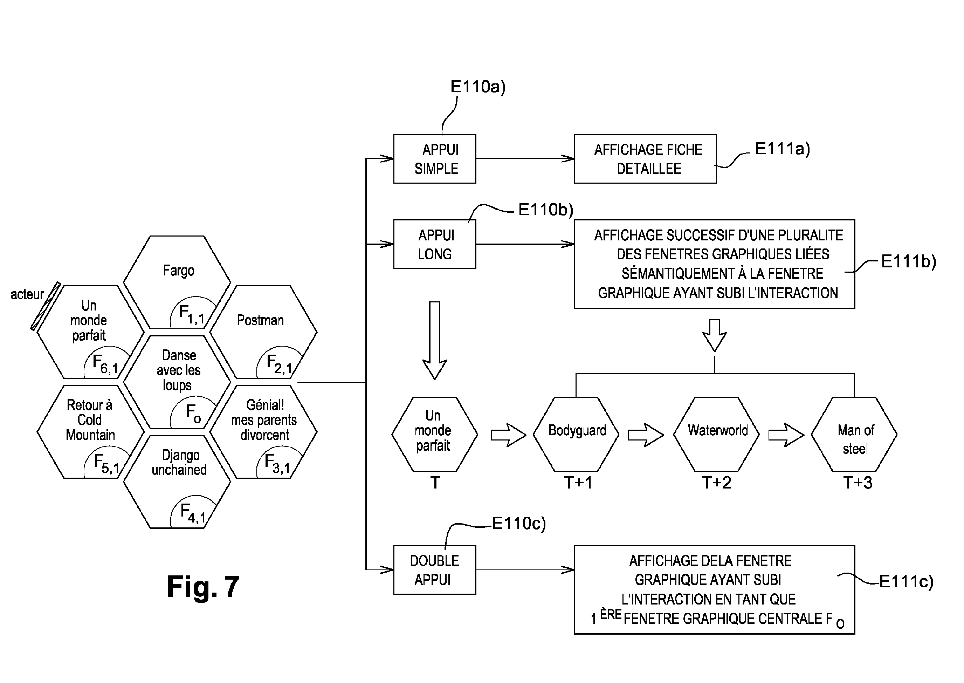

Si une interaction utilisateur avec ladite première fenêtre graphique ou avec l'une lesdites deuxièmes fenêtres graphiques est détectée par le module de détection DET, un procédé d'affichage de contenus selon un nouveau degré d'enrichissement de connaissance, différent du premier degré précité, est alors mis en oeuvre. Un tel procédé d'affichage sera décrit plus loin dans la description en liaison avec la **figure 7****.**

Si en revanche, après une durée prédéterminée, aucune interaction utilisateur avec ladite première fenêtre graphique ou avec l'une lesdites deuxièmes fenêtres graphiques n'a été détectée par le module de détection DET, au cours d'une étape E8 représentée sur la **figure 4****,** au moins un côté auto-activable de chacune des deuxièmes fenêtres graphiques affichées est auto-activé à l'aide du module ACT de déclenchement d'auto-activation précité.

A cet effet, au cours d'une étape E9 représentée sur la **figure 4****,** le module ACT déclenche auprès de la plateforme de service PFS de la **figure 1****,** via le module de communication UC de la tablette TER de la **figure 3****,** une requête en affichage de nouveaux contenus liés sémantiquement aux deuxièmes contenus affichés selon le premier degré d'enrichissement de connaissance.

A réception de cette requête, au cours d'une étape E10 représentée sur la **figure 4****,** la plateforme PFS dialogue avec la base de connaissance BC en vue d'obtenir au moins un troisième contenu lié sémantiquement à au moins un deuxième contenu.

Dans le cas de l'interface graphique de la **figure 5B****,** la base de connaissance BC détermine :
- un premier troisième contenu C_{1,2} dont le genre est commun à celui du contenu identifié dans la première deuxième fenêtre graphique F_{1,1},
- un deuxième troisième contenu C_{2,2} dont l'acteur principal est commun à celui du contenu identifié dans la seconde deuxième fenêtre graphique F_{2,1} ou dont l'acteur principal a joué avec un ou une actrice principale du contenu identifié dans la seconde deuxième fenêtre graphique F_{2,1},

- un troisième troisième contenu C_{3,2} dont le lieu est commun à celui du contenu identifié dans la troisième deuxième fenêtre graphique F_{3,1},
- un quatrième troisième contenu C_{4,2} dont le thème est commun à celui du contenu identifié dans la quatrième deuxième fenêtre graphique F_{4,1}.

Dans le cas de l'interface graphique de la **figure 6B****,** la base de connaissance BC détermine :
- un premier troisième contenu C_{1,2} dont le genre est commun à celui du contenu identifié dans la première deuxième fenêtre graphique F_{1,1},
- un deuxième troisième contenu C_{2,2} dont le thème est commun à celui du contenu identifié dans la seconde deuxième fenêtre graphique F_{2,1},
- un troisième troisième contenu C_{3,2} dont l'acteur principal est commun à celui du contenu identifié dans la troisième deuxième fenêtre graphique F_{3,1} ou dont l'acteur principal a joué avec un ou une actrice principale du contenu identifié dans la troisième deuxième fenêtre graphique F_{3,1},
- un quatrième troisième contenu C_{4,2} dont le lieu est commun à celui du contenu identifié dans la quatrième deuxième fenêtre graphique F_{4,1},
- un cinquième troisième contenu C_{5,2} dont le réalisateur est commun à celui du contenu identifié dans la cinquième deuxième fenêtre graphique F_{5,1},
- un sixième troisième contenu C_{6,2} dont l'année de réalisation est la même que celle du contenu identifié dans la sixième deuxième fenêtre graphique F_{6,1}.

Au cours d'une étape E11 représentée sur la **figure 4****,** la plateforme PFS renvoie à la tablette TER, via le réseau de communication RC, les informations d'identification des contenus déterminés par la base de connaissance BC, en particulier le titre de ces contenus ou l'affiche concernant ces contenus, s'il s'agit de films par exemple.

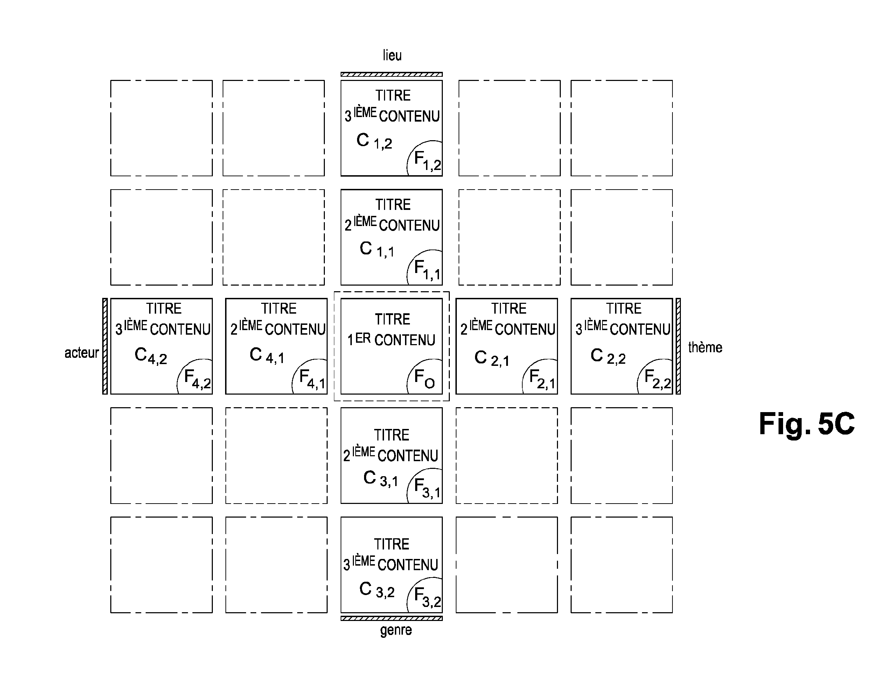

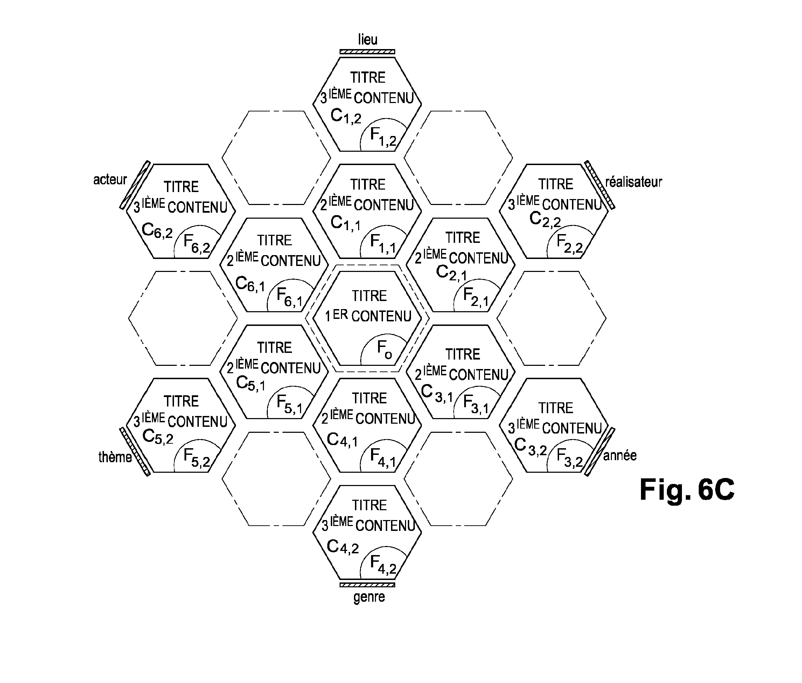

Au cours d'une étape E12 représentée sur la **figure 4****,** il est procédé à l'affichage d'au moins un troisième contenu sur l'écran EC de la tablette TER de la figure 3. A cet effet, une troisième fenêtre graphique identifiant le troisième contenu, par exemple la fenêtre F_{1,2} sur les **figures 5C** et **6C****,** est affichée à l'aide du module MGI de génération d'interface de la **figure 3****,** un côté de ladite troisième fenêtre graphique F_{1,2} affichée étant voisin du côté auto-activable de la deuxième fenêtre graphique F_{1,1}.

Dans l'exemple de la **figure 5C****,** quatre fenêtres graphiques F_{1,2}, F_{2,2}, F_{3,2} et F_{4,2} identifiant respectivement les quatre troisièmes contenus C_{1,2}, C_{2,2}, C_{3,2} et C_{4,2} sont affichées contre les quatre fenêtres graphiques F_{1,1}, F_{2,1}, F_{3,1} et F_{4,1} identifiant respectivement les quatre deuxièmes contenus C_{1,1}, C_{2,1}, C_{3,1} et C_{4,1}.

Les quatre fenêtres graphiques F_{1,2}, F_{2,2}, F_{3,2} et F_{4,2} ainsi affichées autour de la première fenêtre graphique centrale F₀ et des deuxièmes fenêtres graphiques périphériques F_{1,1}, F_{2,1}, F_{3,1} et F_{4,1} permettent à l'utilisateur UT, sans qu'il n'ait eu besoin d'interagir sur la tablette TER, de visualiser très facilement et de façon intelligible, selon un deuxième degré d'enrichissement de connaissance établi par la base de connaissance BC de la **figure 2****,** quatre nouveaux contenus que l'utilisateur ne connaissait pas forcément et qui présentent chacun un lien de parenté avec les deuxièmes contenus affichés précédemment.

Dans l'exemple de la **figure 6C****,** six fenêtres graphiques F_{1,2}, F_{2,2}, F_{3,2}, F_{4,2}, F_{5,2} et F_{6,2} identifiant respectivement les six troisièmes contenus C_{1,2}, C_{2,2}, C_{3,2}, C_{4,2}, C_{5,2} et C_{6,2} sont affichées contre les six deuxièmes fenêtres graphiques F_{1,1}, F_{2,1}, F_{3,1}, F_{4,1}, F_{5,1} et F_{6,1} identifiant respectivement les six deuxièmes contenus C_{1,1}, C_{2,1}, C_{3,1}, C_{4,1}, C_{5,1} et C_{6,1}.

Les six fenêtres graphiques F_{1,2}, F_{2,2}, F_{3,2}, F_{4,2} F_{5,2} et F_{6,2} ainsi affichées autour de la première fenêtre graphique centrale F₀ et des deuxièmes fenêtres graphiques périphériques F_{1,1}, F_{2,1}, F_{3,1}, F_{4,1}, F_{5,1} et F_{6,1} permettent à l'utilisateur UT, sans qu'il n'ait eu besoin d'interagir sur la tablette TER, de visualiser très facilement et de façon intelligible, selon un deuxième degré d'enrichissement de connaissance établi par la base de connaissance BC, six nouveaux contenus que l'utilisateur ne connaissait pas forcément et qui présentent chacun un lien de parenté avec les deuxièmes contenus affichés précédemment.

De façon correspondante à la configuration d'affichage décrite en relation avec les **figures 5B** et **6B** **:**
- les troisièmes fenêtres graphiques affichées ont toutes la même forme et la même taille de façon à présenter les contenus à l'utilisateur de manière uniforme et condensée,
- les troisièmes fenêtres graphiques sont affichées au voisinage des deuxièmes fenêtres graphiques, selon une direction prédéterminée qui est celle représentée par les doubles flèches sur les **figures 5B** et **6B****.**

Selon l'invention, chacune des troisièmes fenêtres graphiques est affichée selon un axe perpendiculaire au côté auto-activable de chacune des deuxièmes fenêtres graphiques qui lui est associé.

Selon l'invention, au moins un côté de chacune des troisièmes fenêtres graphiques affichées est associé à une métadonnée qui n'est pas obligatoirement la même qu'une des métadonnées associées à la deuxième fenêtre graphique qui l'avoisine.

Dans l'exemple représenté sur la **figure 5C****,** pour chaque troisième fenêtre graphique affichée, un seul côté est auto-activable et est associé à une métadonnée déjà attribuée à l'un des côtés de la deuxième fenêtre graphique qui l'avoisine.

Ainsi, selon un effet miroir par rapport à chacune des deuxièmes fenêtres graphiques:
- la troisième fenêtre F_{1,2} a uniquement son côté supérieur auto-activable qui est associé à la métadonnée « lieu » qui était elle-même associée au côté inférieur de la deuxième fenêtre graphique F_{1,1},
- la troisième fenêtre F_{2,2} a uniquement son côté droit auto-activable qui est associé à la métadonnée « thème» qui était elle-même associée au côté gauche de la deuxième fenêtre graphique F_{2,1},
- la troisième fenêtre F_{3,2} a uniquement son côté inférieur auto-activable qui est associé à la métadonnée « genre » qui était elle-même associée au côté supérieur de la deuxième fenêtre graphique F_{3,1},
- la troisième fenêtre F_{4,2} a uniquement son côté gauche auto-activable qui est associé à la métadonnée « acteur » qui était elle-même associée au côté droit de la deuxième fenêtre graphique F_{4,1}.

Dans l'exemple représenté sur la **figure 6C****,** pour chaque troisième fenêtre graphique affichée, un seul côté est auto-activable et est associé à une métadonnée déjà attribuée à l'un des côtés de la deuxième fenêtre graphique qui l'avoisine.

Ainsi, selon un effet miroir par rapport à chacune des deuxièmes fenêtres graphiques:
- la troisième fenêtre F_{1,2} a uniquement son côté supérieur auto-activable qui est associé à la métadonnée « lieu » qui était elle-même associée au côté inférieur de la deuxième fenêtre graphique F_{1,1},
- la troisième fenêtre F_{2,2} a uniquement son côté supérieur droit auto-activable qui est associé à la métadonnée « réalisateur » qui était elle-même associée au côté inférieur gauche de la deuxième fenêtre graphique F_{2,1},
- la troisième fenêtre F_{3,2} a uniquement son côté inférieur droit auto-activable qui est associé à la métadonnée « année » qui était elle-même associée au côté supérieur gauche de la deuxième fenêtre graphique F_{3,1},
- la troisième fenêtre F_{4,2} a uniquement son côté inférieur auto-activable qui est associé à la métadonnée « genre » qui était elle-même associée au côté supérieur de la deuxième fenêtre graphique F_{4,1},
- la troisième fenêtre F_{5,2} a uniquement son côté inférieur gauche auto-activable qui est associé à la métadonnée « thème » qui était elle-même associée au côté supérieur droit de la deuxième fenêtre graphique F_{5,1},
- la troisième fenêtre F_{6,2} a uniquement son côté supérieur gauche auto-activable qui est associé à la métadonnée « acteur » qui était elle-même associée au côté inférieur droit de la e la deuxième fenêtre graphique F_{6,1}.

Selon un mode de réalisation non représenté, le module MGI de génération d'interface est configuré pour faire apparaître en surbrillance les côtés auto-activables des troisièmes fenêtres affichées, de façon à ce que l'utilisateur comprenne la logique de voisinage entre les contenus identifiés par les troisièmes fenêtres et les contenus identifiés par les deuxièmes fenêtres.

Dans le cas de l'interface graphique affichée sur les **figures 5C** et **6C****,** une nouvelle étape d'affichage de troisièmes contenus est éventuellement mise en oeuvre de telle façon qu'un ensemble de troisièmes fenêtres graphiques entoure complètement les deuxièmes fenêtres graphiques. Ces troisièmes fenêtres graphiques complémentaires sont représentées en traits mixtes sur les **figures 5C** et **6C****.** Leur affichage est obtenu d'une façon similaire à l'affichage des deuxièmes fenêtres complémentaires tel que décrit plus haut en liaison avec les **figures 5B** et **6B****.**

A la suite de l'étape E12 d'affichage précitée, l'étape E7 de la **figure 4** est à nouveau mise en oeuvre, dans le but d'afficher sur l'écran EC de la tablette TER de la **figure 3** de nouveaux contenus, selon un troisième degré d'enrichissement de connaissance, d'une façon similaire aux étapes E8 à E12 précitées. L'étape E7 est itérée tant que la taille de l'écran EC reste adaptée pour l'affichage de ces nouveaux contenus.

Si à la suite de l'étape E7 précitée, une interaction utilisateur avec ladite première fenêtre graphique centrale F₀ ou avec l'une lesdites deuxièmes fenêtres graphiques a été détectée par le module de détection DET, il est procédé aux étapes représentées sur la **figure 7****.**

Sur la **figure 7****,** une interface graphique similaire par exemple à celle représentée sur la **figure 6B** est affichée sur l'écran EC de la tablette TER de la **figure 3****.**

Dans l'exemple représenté, les contenus sont des films.

La première fenêtre graphique F₀ indique par exemple le film « Danse avec les loups » soit parce que l'utilisateur l'a visualisé précédemment, soit parce qu'il l'a ajouté en tant que signet, soit parce qu'il a partagé des commentaires sur ce film ou indiqué qu'il a aimé ce film, via le réseau de communication RC de la **figure 1****.**

Les six métadonnées (non représentées) associées respectivement aux six côtés de la fenêtre graphique F₀ sont celles indiquées sur la **figure 6A****.**

La première deuxième fenêtre graphique F_{1,1} indique le film « Fargo », dont le lieu de tournage principal : « Dakota » est commun avec le lieu de tournage principal de « Danse avec les loups ».

La seconde deuxième fenêtre graphique F_{2,1} indique le film « Postman » qui comme « Danse avec les loups » a été réalisé par Kevin Costner.

La troisième deuxième fenêtre graphique F_{3,1} indique le film « Génial ! mes parents divorcent » qui a été réalisé en 1990, comme « Danse avec les loups ».

La quatrième deuxième fenêtre graphique F_{4,1} indique le film « Django unchained » qui est du genre « western » comme « Danse avec les loups ».

La cinquième deuxième fenêtre graphique F_{5,1} indique le film « Retour à Cold Mountain » dont le thème principal est la guerre de sécession, comme dans le film « Danse avec les loups ».

La sixième deuxième fenêtre graphique F_{6,1} indique le film « Un monde parfait » dont l'acteur principal Kevin Costner est également acteur principal dans le film « Danse avec les loups ».

Au cours d'une étape 110a) représentée sur la **figure 7****,** l'utilisateur effectue un appui d'un premier type sur l'une des fenêtres graphiques affichées. Dans l'exemple représenté, il s'agit d'un appui simple. Cet appui simple est par exemple un clic rapide ou un effleurement tactile sur la fenêtre graphique considérée.

Un tel appui simple est alors détecté par le module de détection DET du dispositif de contrôle d'affichage 100 de la **figure 3****,** ce qui a pour effet de déclencher auprès de la plateforme de service PFS de la **figure 1****,** via le module de communication UC de la tablette TER de la **figure 3****,** une requête en affichage d'informations complémentaires relatives au contenu identifié dans la fenêtre sur laquelle l'utilisateur a interagi.

La plateforme PFS renvoie à la tablette TER, via le réseau de communication RC, les informations complémentaires qui, au cours d'une étape 111 a) représentée sur la **figure 7****,** sont affichées sous la forme d'une fiche détaillée, à l'aide du module MGI de génération d'interface de la **figure 3****.** Cette fiche peut être affichée à la place de l'interface graphique précédemment affichée ou être rajoutée à l'intérieur de la fenêtre graphique sur laquelle l'utilisateur a interagi. Dans le cas où la fiche détaillée intègre une interface graphique de lecture du contenu, l'utilisateur pourra alors lancer directement le contenu.

A titre d'alternative à l'étape 110a) précitée, au cours d'une étape 110b) représentée sur la **figure 7****,** l'utilisateur effectue à l'instant T un appui d'un deuxième type sur l'une des fenêtres graphiques affichées, par exemple la fenêtre indiquant « Un monde parfait ». Dans l'exemple représenté, il s'agit d'un appui long. Un exemple de tel appui long consiste à laisser son doigt quelques secondes sur la fenêtre graphique sélectionnée.

Un tel appui long est alors détecté par le module de détection DET du dispositif de contrôle d'affichage 100 de la **figure 3****,** ce qui a pour effet de déclencher auprès de la plateforme de service PFS de la **figure 1****,** via le module de communication UC de la tablette TER de la **figure 3****,** une requête en affichage de nouveaux contenus liés sémantiquement au contenu identifié dans la fenêtre sur laquelle l'utilisateur a interagi.

A réception de cette requête, la plateforme PFS dialogue avec la base de connaissance BC en vue d'obtenir un ou plusieurs contenus liés sémantiquement au contenu identifié dans la fenêtre sur laquelle l'utilisateur a interagi. Dans l'exemple représenté sur la **figure 7****,** la métadonnée choisie est « acteur principal », sa valeur est « Kevin Costner » et le lien sémantique choisi est « a joué dans ».

La base de connaissance BC de la **figure 2** détermine par exemple trois contenus liés sémantiquement au contenu « Un monde parfait », tels que par exemple « Bodyguard », « Waterworld » et « Man of steel », dans lesquels l'acteur Kevin Costner a tenu un des rôles principaux.

La plateforme PFS renvoie ensuite à la tablette TER, via le réseau de communication RC, les informations d'identification des contenus déterminés par la base de connaissance BC, en particulier le titre de ces contenus ou l'affiche concernant ces contenus, puisqu'il s'agit de films dans l'exemple représenté.

Au cours d'une étape 111b) représentée sur la **figure 7****,** sont alors affichées successivement sur l'écran EC de la tablette TER de la **figure 3** une pluralité de fenêtres graphiques identifiant chacune un contenu ayant, comme valeur d'information représentative dudit contenu, la valeur de l'information représentative du contenu identifié dans ladite fenêtre graphique sur laquelle l'appui long a été effectué.

Un tel affichage est mis en oeuvre à l'aide du module MGI de génération d'interface de la **figure 3****.**

Dans l'exemple représenté sur la **figure 7****,** une première fenêtre graphique identifiant le film « Bodyguard » s'affiche à l'instant T+1, puis une deuxième fenêtre graphique identifiant le film « Waterworld » s'affiche à l'instant T+2 et enfin une troisième fenêtre graphique identifiant le film « Man of steel » s'affiche à l'instant T+3.

Dans l'exemple représenté, l'affichage des trois films ci-dessus suit l'ordre chronologique croissant de l'année de sortie de chacun de ces films. Un autre ordre d'affichage pourra bien sûr être adopté en fonction de l'implémentation choisie.

De façon particulièrement avantageuse, il est ainsi proposé à l'utilisateur de découvrir de nouveaux contenus selon un degré d'enrichissement de connaissance encore différent de celui proposé en liaison avec les **figures 5B** à **6C****.**

A titre d'alternative aux étapes 110a) et 110b) précitées, au cours d'une étape 110c) représentée sur la **figure 7****,** l'utilisateur effectue un appui d'un troisième type sur l'une des deuxièmes fenêtres graphiques qui entourent la première fenêtre graphique centrale F₀. Dans l'exemple représenté, il s'agit d'un double appui tel que par exemple un double clic ou un double effleurement sur la fenêtre sélectionnée par l'utilisateur.

Un tel appui double est alors détecté par le module de détection DET du dispositif de contrôle d'affichage 100 de la **figure 3****,** ce qui a pour effet, au cours d'une étape E111c) représentée sur la **figure 7****,** de provoquer l'affichage de la fenêtre sélectionnée par l'utilisateur en tant que nouvelle première fenêtre graphique centrale F₀. Un tel affichage est mis en oeuvre à l'aide du module MGI de génération d'interface de la **figure 3****.**

De nouveaux contenus liés sémantiquement à celui identifié dans la nouvelle première fenêtre graphique centrale F₀ pourront alors être affichés dans des deuxièmes fenêtres graphiques, conformément aux étapes E1 à E6 précitées, en liaison avec la **figure 6B****.**

Selon un mode de réalisation, avant même que les deuxièmes fenêtres graphiques soient affichées, l'utilisateur a la possibilité d'effectuer un appui court sur la nouvelle première fenêtre graphique centrale F₀, de façon à consulter la fiche détaillée du contenu identifié par cette fenêtre.

De façon correspondante, le procédé d'affichage qui vient d'être décrit ci-dessus en liaison avec la **figure 7** peut être appliqué à l'interface de la **figure 6C** ayant un degré supérieur d'enrichissement de connaissance. Un tel procédé d'affichage s'applique également à l'interface à fenêtres carrées telle que représentée sur les **figures 5B** et **5C****.**

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

## Revendications

1. Procédé de contrôle de l'affichage d'une pluralité de contenus, un contenu considéré étant associé à au moins une information qui est représentative dudit contenu considéré et qui est définie par un type et au moins une valeur, ledit procédé étant **caractérisé en ce qu'**il comprend les étapes suivantes :
- afficher (E1) une première fenêtre graphique (F₀) identifiant un premier contenu parmi ladite pluralité de contenus, ladite première fenêtre ayant un premier côté qui est associé à une valeur d'une information d'un premier type représentative dudit premier contenu,
- déclencher (E3) l'envoi d'une requête en affichage d'un deuxième contenu dont l'information représentative du deuxième contenu est du même type que l'information d'un premier type représentative du premier contenu,
- en réponse à l'envoi de ladite requête, recevoir au moins une information d'identification du deuxième contenu et afficher (E6) une deuxième fenêtre graphique (F_{1,1}) identifiant le deuxième contenu à partir de l'information d'identification reçue, un premier côté de ladite deuxième fenêtre graphique affichée étant voisin du premier côté de ladite première fenêtre graphique (F₀) qui est associé à la valeur de l'information d'un premier type représentative dudit premier contenu, la deuxième fenêtre graphique ayant un deuxième côté qui est associé à une valeur d'une information d'un deuxième type représentative dudit deuxième contenu.

2. Procédé de contrôle d'affichage selon la revendication 1, dans lequel si après une durée prédéterminée, aucune interaction utilisateur avec ladite première fenêtre graphique ou ladite deuxième fenêtre graphique n'a été détectée, le procédé comprend les étapes suivantes :
- déclencher (E9) l'envoi d'une requête en affichage d'un troisième contenu dont l'information représentative du troisième contenu est du même type que l'information d'un deuxième type représentative du deuxième contenu ,
- en réponse à l'envoi de ladite requête, recevoir au moins une information d'identification du troisième contenu et afficher (E12) une troisième fenêtre graphique identifiant le troisième contenu à partir de l'information d'identification reçue, un premier côté de ladite troisième fenêtre graphique affichée étant voisin du deuxième côté de la deuxième fenêtre graphique (F_{1,1}) qui est associé à la valeur de l'information du deuxième type représentative dudit deuxième contenu.

3. Procédé de contrôle d'affichage selon la revendication 1 ou la revendication 2, dans lequel les première, deuxième et troisième fenêtres graphiques sont de taille et de forme identiques.

4. Procédé de contrôle d'affichage selon l'une quelconque des revendications 1 à 3, dans lequel la valeur de l'information du premier type représentative dudit premier contenu et la valeur de l'information du premier type représentative du deuxième contenu sont égales ou différentes.

5. Procédé de contrôle d'affichage selon l'une quelconque des revendications 1 à 4, comprenant en outre les étapes suivantes :
- interagir (E110b)) avec l'une quelconque des première, deuxième et troisième fenêtres graphiques affichées,
- afficher (E111 b)) successivement une pluralité de fenêtres graphiques identifiant chacune un contenu ayant, comme valeur d'information représentative dudit contenu, la valeur de l'information représentative du contenu identifié dans ladite fenêtre graphique sur laquelle l'interaction a été mise en oeuvre.

6. Procédé de contrôle d'affichage selon l'une quelconque des revendications 1 à 5, dans lequel le premier type et/ou le deuxième type de l'information représentative d'un contenu est prédéterminé.

7. Procédé de contrôle d'affichage selon l'une quelconque des revendications 1 à 5, dans lequel le premier type et/ou le deuxième type de l'information représentative d'un contenu est configurable.

8. Dispositif (100) de contrôle de l'affichage d'une pluralité de contenus, un contenu considéré étant associé à au moins une information qui est représentative dudit contenu considéré et qui est définie par un type et au moins une valeur, ledit dispositif étant **caractérisé en ce qu'**il comprend :
- des moyens (MGI) pour afficher une première fenêtre graphique (F₀) identifiant un premier contenu parmi ladite pluralité de contenus, ladite première fenêtre ayant un côté qui est associé à une valeur d'une information d'un premier type, représentative dudit premier contenu,
- des moyens (ACT) pour déclencher l'envoi d'une requête en affichage d'un deuxième contenu dont l'information représentative du deuxième contenu est du même type que l'information d'un premier type représentative du premier contenu, lesquels provoquent la réception d'au moins une information d'identification du deuxième contenu et l'affichage, par lesdits moyens d'affichage, d'une deuxième fenêtre graphique (F_{1,1}) identifiant ledit deuxième contenu à partir de l'information d'identification reçue, un premier côté de ladite deuxième fenêtre graphique affichée étant voisin du premier côté de ladite première fenêtre graphique (F₀) qui est associé à la valeur de l'information d'un premier type représentative dudit premier contenu, la deuxième fenêtre graphique ayant un deuxième côté qui est associé à une valeur d'une information d'un deuxième type représentative dudit deuxième contenu.

9. Dispositif de contrôle d'affichage selon la revendication 8, dans lequel si après une durée prédéterminée, aucune interaction utilisateur avec ladite première fenêtre graphique ou ladite deuxième fenêtre graphique n'a été détectée, lesdits moyens (ACT) de déclenchement d'envoi de requête en affichage de contenu sont activés pour déclencher l'envoi d'une requête en affichage d'un troisième contenu dont l'information représentative du troisième contenu est du même type que l'information d'un deuxième type représentative du deuxième contenu, lesquels provoquent la réception d'au moins une information d'identification du troisième contenu et l'affichage, par lesdits moyens d'affichage, d'une troisième fenêtre graphique identifiant le troisième contenu à partir de l'information d'identification reçue, un premier côté de ladite troisième fenêtre graphique affichée étant voisin du deuxième côté de ladite deuxième fenêtre graphique (F_{1,1}) qui est associé à la valeur de l'information du deuxième type représentative dudit deuxième contenu.

10. Terminal (TER) apte à contenir un dispositif (100) de contrôle d'affichage selon la revendication 8 ou la revendication 9.

11. Programme d'ordinateur comportant des instructions de code de programme pour l'exécution des étapes du procédé de contrôle d'affichage selon l'une quelconque des revendications 1 à 7, lorsque ledit programme est exécuté sur un ordinateur.

12. Support d'enregistrement lisible par un ordinateur sur lequel est enregistré un programme d'ordinateur comprenant des instructions de code de programme pour l'exécution des étapes du procédé de contrôle d'affichage selon l'une quelconque des revendications 1 à 7, lorsque ledit programme est exécuté par un ordinateur.
